# EUROPEAN PATENT APPLICATION

(11) **EP 1 124 393 A1**
(43) Date of publication of application: **16.08.2001**
(21) Application number: 00200420.8
(22) Date of filing: 08.02.2000
(51) Int. Cl.: H04Q 7/38

(54) **Cellular communication system and method of structuring control channel transmissions therein**

(71) Applicant: Motorola Limited, Basingstoke, Hampshire RG22 4PD (GB)
(72) Inventor: Bourque, Francis, (FR); Prost, Jean-Baptiste, Toulouse 31500 (FR)
(74) Representative: Kopacz, William James

(57) **Abstract**

In a cellular communication system (10), such an EDGE Compact system supporting discontinuous downlink control channel transmissions (12), a multiframe control channel (100) contains a multiplicity of signalling blocks (B0-B11) partitioned by bursts associated with frequency correction (CFCCH) and synchronisation (CSCH). A scanning subscriber unit (64-70) wishing to access the cellular system (10) is designed to take power measurements of an incident frequency environment to identify a cell capable of providing service to the subscriber unit. With downlink control channel transmissions sent at full power by a serving base station (42-56), the multiframe (100) is structured to ensure that signalling blocks (B0, B3, B6, B9) are regularly transmitted throughout the multiframe (100). Additionally, with regard to particularly significant control signalling blocks, such as those of a broadcast control (CPBCCH) and a paging (CPCCH) nature, these are sequenced into the multiframe (100) such that any variation in a basic distribution of such control blocks in the multiframe follows an underlying pattern. In other words, in relation to CPBCCH and CPCCH logical channels, there is a fixed allocation scheme of control signalling block transmissions, although interlacing may vary the exact content of each block according to a defined transmission sequence between CPBCCH and CPCCH.

## Description

### Background to the Invention

This invention relates, in general, to a cellular communication system and method of structuring control channel transmissions therein, and is particularly, but not exclusively, applicable to cellular communication environments employing discontinuous transmission, such as is envisaged in EDGE Compact systems developed from the Global System for Mobile (GSM) communication architecture.

### Summary of the Prior Art

With increasing demand for cellular services, communication system designers are now modifying base technologies, such as GSM, to improve efficiency. Generally, the aim of this particular configuration is to enhance capacity, to increase spectral efficiency and to reduce administrative overhead. In the first respect, capacity may be increased through the ability to re-use different traffic (and control) channel frequencies in tighter re-use patterns. Multi-layer techniques, for example, directly address the limited frequency spectrum available in the wireless domain by employing frequency re-use in ever increasingly tight frequency re-use patterns and through the partitioning of traffic between an umbrella (or macro) cell that overlays a plurality of smaller cells.

In one particular cellular system, a plurality of adjacent serviceable cells are assigned traffic channel carriers according to a regimented (or sequenced) frequency re-use pattern but no dedicated individual control channel carriers for individual cells. In other words, a single broadcast control channel (BCCH) overlays a multitude of pico-cellular type traffic channels, with individual pico-cellular base station heads operating in a simulcast mode to transmit the BCCH control information. Effectively, therefore, a single wide-area BCCH services a plurality of cellular capsules, with the BCCH transmitted in the downlink from, effectively, a global base station. This form of system design is relatively easy to implement, especially in an indoor environment, and is not wasteful of frequency resources that would otherwise be required in the provision of individual BCCHs in individual cells according to a BCCH frequency re-use pattern. However, with a unitary but generally simulcast BCCH, the system as a whole is unable to benefit from being able to continuously monitor downlink transmissions, since BCCH transmission are curtailed and are therefore effectively non-continuous across the cellular service area. In deployment, a pico-cellular configuration of cells could, for example, be arranged to service a particular floor or floors of a shopping complex or building, or a commercial group within an office suite.

With an overlaid BCCH (although generally realised by local simulcast broadcasts from base station heads) and a plurality of pico-cells, non-continuous down link transmissions are advantageous since the environment supports a higher (i.e. better) carrier to interference (C/I) ratio. In other words, downlink interference is only caused periodically by intermittent data traffic. With improved C/I, the system is generally better able to support any kind of transfer and especially data transfer, such as required in the Group Packet Radio System (GPRS). Moreover, in data services, it is preferably to have a good C/I since this reduces the requirement for overhead associated with forward error correction coding and hence results in a system that has a corresponding increase in data traffic throughput.

With respect to pico-cellular systems, these are employed in relatively small but densely populated serviceable areas, such as within buildings, between floors of buildings and in indoor environments generally. Pico-cells therefore have cell radii of between about ten and fifty metres and hence utilise a frequency re-use pattern for associated traffic channels that repeats over a significantly smaller distance than a corresponding re-use pattern for traffic channels in either a micro-cellular or macro-cellular scheme. In other words, successively smaller cells generally benefit from statistical frequency multiplexing to obtain tighter frequency re-use schemes.

The deployment of such multi-layer cellular techniques is likely to remain prevalent in resolving capacity issues for present and proposed cellular systems, including third generation systems such as UMTS (Universal Mobile Telecommunication System).

Turning to the enhancement of GSM, generally considered to be the de facto world-standard in time division multiplexed cellular systems, there has been continuous improvements in performance offered by the introduction and use of half-rate codecs, and higher throughput obtained through the development of the EDGE Compact system (otherwise known as EGPRS Compact). As will be appreciated, EDGE Compact utilises an 8-PSK (phase shift-keyed) modulation technique that therefore supports three bits per symbol and is hence significantly more efficient than conventional GSM. Although EDGE Compact can be operated in a stand-alone capacity, it is more generally (and at least presently) considered as either an adjunct to or a time division multiplexed (TDM) system having a circuit-switched backbone.

As regards the radio environment employed within an EDGE (EGPRS) Compact system, there is a sharing of channel carriers between ostensibly adjacent cells in a limited geographic environment; this applies to both any control channel resource and specific traffic carriers. More especially, EDGE Compact is presently configured such that a cluster of nine or twelve cells share three frequency carriers (at least in relation to carriers for control channel purposes); this would conventionally result in an unacceptable interference environment. However, subscriber units are able to differentiate between cells by use of 'time groups' that effectively provide an offset in control channel transmissions between cells using a common control channel carrier resource. In other words, at any one time, only one cell actually transmits (i.e. broadcasts) control channel information on a carrier that is shared with other cells. On a practical basis, since the control channel is supported by a dedicated time-slot within a time division frame, a common control channel carrier in a four cell arrangement has equally partitioned and sequenced transmission periods, i.e. time-slots TS-1, TS-3, TS-5 and TS-7 are utilised within a four cell pattern of a cluster.

In contrast with control channel (downlink) transmissions that are always at full power, traffic channel downlink transmissions are subject to power control; this limits the interference environment by ensuring that co-channel interference that would otherwise corrupt data in the downlink is minimised. In essence, in the traffic domain, a combination of downlink power control allied with the use of specific training sequences, modulation techniques and error correction algorithms address potential interference problems and ensures that EDGE Compact benefits from an increased frequency re-use scheme.

Turning to the mechanism by which EDGE Compact subscriber units select a servicing base station transceiver, the subscriber unit presently undertakes a defined regime. The subscriber unit (which may be a mobile unit) begins by assessing a power/energy profile of its local area frequency spectrum; this requires the subscriber unit to undertake numerous power measurements at different frequencies. In fact, since a subscriber unit in EDGE Compact initially has no synchronisation to a possible serving base station, the subscriber unit is unable to guarantee direct access to a 'signalling (control channel) block' supported on a downlink carrier; this is in stark contrast with GSM. Once the power measurements have been completed, they are rank-ordered by the subscriber unit. Then, the subscriber unit must seek to acquire frequency alignment with a control channel carrier for each possible carrier to identify a servicing cell suitable for use. Finally, with a selected cell having a selected control channel carrier frequency, the subscriber unit must acquire synchronisation at a bit level to ensure accurate internal timer operation.

In GSM, the continuous transmission of the control channel multiframe and the various timely occurrences of control bursts thereof ensures that location of the frequency correction channel (FCCH) and hence a cell is accomplished relatively easily and quickly. Importantly, however, in EDGE Compact, discontinuous control channel transmissions present a considerable problem regarding the analysis of power distribution within possibly useable frequency spectrum.

At this point, it is appropriate to re-consider the general structure of a control channel, and to clarify the concept of both a time-slot and a burst. As should be appreciated, the control channel in a TDM-based system is generally associated with a dedicated time-slot that is arranged to carry different control instructions in successive transmissions thereof. A GSM frame constructed from eight time-slots therefore has duration of 4.615 milliseconds (ms), meaning that each time-slot has an approximate length of 0.577ms. Successive but frame separated 0.577ms downlink time-slots support bursts of data, with each control channel multiframe defined by a set number of frames. The EDGE Compact multiframe consists of frames; this contrasts to the fifty-one frames used in conventional GSM. Of the fifty-two frames in the EDGE Compact multiframe, forty-eight of the frames are assigned in contiguous blocks of four that provide control signalling blocks B0 to B11. In fact, of these twelve control blocks, two of which are fixed within the multiframe format whereas others (whether they are of the same type as those that are fixed or whether they are of a different type/nature) are dynamically assignable.

In considerably more detail, the EDGE Compact multiframe is equally partitioned by the compact frequency correction channel (CFCCH) at frame-25 and the compact synchronisation channel (CSCH) at frame-51. The multiframe is also structured to always include a compact packet broadcast control channel (CPBCCH) that always accommodates block zero (i.e. frame-0 to frame-3), and a compact packet paging channel (CPPCH) in block eleven. Information contained in the CPBCCH is actually associated with many aspects of a cellular call, including channel allocation and handover. Two of the remaining ten blocks are also allotted to support either CPBCCH or CPPCH downlink transmissions, although the exact block allocation is dynamically variable within the multiframe (as is whether both are CPBCCH, both are CPPCH or there is a split therebetween). The remaining control signalling (CC) blocks in EDGE Compact are allocated on a dynamic basis to support whatever control function is required within a cell at a particular time. The remaining control signalling blocks may take the form of paging channels, access grant channels, broadcast control channels, etc., with these functional channel designations being merely examples of typical internal control channels supported within the CC multiframe. In other words, control signalling blocks are allocated in a pseudo-random scheme from a subscriber unit perspective. To account for the remaining two frames, these are assigned for packet timing correction (PTCCH). The multiframe structure is described in CRA082rl of GSM Technical Standard (TS) 05.02 section 6.5.1 and CRA180rl of GSM TS 05.08 section 12 and CRA085rl 2 of GSM TS 06.02.

In EDGE Compact, in view of the discontinuous nature of downlink transmissions and the fact that the CFCCH is transmitted only once per multiframe period, a subscriber unit is potentially subject to extremely long and potentially unacceptable delay to the end user. In fact, working through the statistics, an EDGE Compact subscriber unit can presently be assured of have access to a burst of a signalling control channel block only once every nineteen frames for a single carrier frequency and for a single cell. Of course, it is conceivable that the system operates to interlace transmissions from different cells. With EDGE Compact requiring five power measurements per carrier, with each measurement spaced apart by one second, it can be seen that the length of time required by a subscriber unit to acquire access to the system can be considerable. CRA180rl of GSM TS 05.08, section 12, indicates that when a subscriber unit has to measure the power level of a cell, the subscriber unit must pick up radio frequency (RF) levels only on the bursts that have been emitted by the cell at full power. It should now be appreciated that, at a minimum, such bursts occur on the CFCCH, CSCH and on four blocks allocated to the CPBCCH and CPPCH logical channels.

Two parameters determine the position of the CPBCCH and CPPCH in the EDGE Compact multiframe, namely BS_PBCCH_BLKS and BS_PAG_BLKS_RES. These logical control channels follow an ordered sequence: B0, B6, B3, B9, B1, B7, B4, B10, B, B8, B5, B11. The blocks supporting CPBCCH are the first blocks of the ordered list, in number equal to BS_PBCCH_BLKS. To determine the blocks supporting CPPCH, remove from the ordered list the BS_PBCCH_BLKS + BS_PAG_BLKS_RES blocks; the remaining blocks are CPPCH blocks. For example:

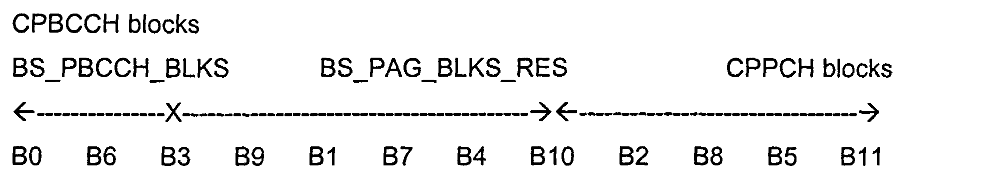

As indicated, the total number of CPBCCH and CPPCH blocks is at least equal to four. Furthermore, since there is at least one block of CPBCCH and one block of CPPCH, there are at least three configurations for full power block within a logical control channel limited EDGE Compact multiframe. If we consider a power scan of such channels without prior synchronisation nor knowledge of the broadcast parameters BS_PBCCH_BLKS and BS_PAG_BLKS_RES, then a basic algorithm consists in opening a reception window long enough to contain at least one full power burst. This window has to be designed for the worst scenario and so provides a minimum duration of 150 time-slots for the window.

The broadcast parameters NIB_CPBCCH (2 bits, see CR A441 Rev1 on GSM TS 04.06 section 12) and NIB_CPBCCH (4 bits) work like BS_PBCCH_BLKS and BS_PAG_BLKS_RES and provide time-group information to subscriber units within cells; these provide the necessary co-channel isolation to avoid interference. Three sets of both parameters are broadcast to the mobile stations, relating to three different timeslot numbers in the blocks.

The requirements imposed by the standard potentially impose unacceptably long subscriber unit scan times, as exposed in the study "UWCC.GTF.PDFG/99.08.03.10 - PLMN Selection in GSM and 200kHz stand-alone classic/Compact" by AT&T Wireless Services, Inc. That paper concludes that under certain network configurations and when employing brute force algorithms, it could take up to seven minutes for an EDGE Compact subscriber unit to be able to obtain services from a military-type system having approximately five hundred carriers. This contrasts with public systems that potentially have a relatively modest (but still unacceptable) access time of about thirty seconds.

Although system access time has been addressed to some extent, the present solutions to the problem are workarounds and do not address the fundamental issues. Generally, current system designs generally operate to avoid unnecessary searches across the entire frequency band, and instead seek to obtain a list of frequencies or "pointers" before attempting to synchronise on EDGE Compact carriers. In essence, existing systems attempt to instruct subscriber units to look only to those frequency carriers that are adjacent to an identified carrier from a specific Compact (or EDGE Compact) cell. Unfortunately, under certain circumstances, there are needs to search for an entire frequency band for EDGE Compact cells, such as when the network is operating independently in a stand-alone way or when there is a general lack of coverage. In both instances, the subscriber unit is unable to obtain frequency indications by any other means, and such instances occur, for example, in a data-only network configuration or for EDGE Phase II where Voice-over-internet protocol is foreseen without the need for an existing support network.

In summary, therefore, two significant problems are prevalent in relation to non-continuous downlink transmission system, such as EDGE Compact. First, the ad hoc way by which the CPBCCH and CPPCH control signalling blocks are allocated (this being non-optimal for a subscriber unit that attempts to collect power measurements without knowledge of the occurrence time of the CPBCCH and the CPPCH). Second, the position of the full-power bursts changes from one cell to another depending on the number of CPBCCH and CPPCH blocks allocated in each cell, and this causes software designers to construct non-optimum power measurement algorithms on worst cases scenarios in which subscriber units are without prior synchronisation information. Both problems increase the time to obtain valid power measure on EDGE Compact cells, and searches for EDGE Compact carriers can be unacceptably long.

Block allocation in EDGE Compact is described in the document CR A085 Rev. 2 on ETSI TS 05.02 (sections 6.2, 6.3, 6.5).

An improved mechanism by which subscriber units can more effectively obtain access to a serving cell exhibiting discontinuous control channel transmissions is desired, and specifically one that is less susceptible to excessive access delays brought about by imposed power measurement strategies in a subscriber unit registration/affiliation process.

### Summary of the Invention

According to a first aspect of the present invention there is provided a method of structuring a control channel multiframe in a cellular communication system employing discontinuous downlink transmissions, the control channel multiframe having a multiplicity of control signalling blocks dynamically assignable to support a plurality of logical control channel functions and wherein some of said plurality of logical control channel functions are transmitted at a maximum power level, the method characterised by: providing a regular distribution within the multiplicity of control signalling blocks of those logical control channel functions transmitted at the maximum power level.

In a preferred embodiment the logical control channel functions transmitted at the maximum power level include at least two species of logical control channel transmission, and the method further comprises: structuring transmission of said species of logical control channel such that their transmissions follow a predetermined order.

Preferably, at least two logical control channel functions are transmitted at the maximum power level during each control channel multiframe, said at least two control channel functions associated with at least one of a broadcast control channel and a paging channel.

In a specific embodiment, at least four logical control channel functions are transmitted at the maximum power level during each control channel multiframe, said at least four control channel functions associated with at least one broadcast control channel block and at least one paging channel block.

The multiframe may further comprise at least a synchronisation burst and the method may therefore further comprise placing the synchronisation burst substantially adjacent in time to, and preferably contiguous with, a broadcast control channel transmitted at the maximum power level.

In a second aspect of the present invention there is provided a cellular communication system comprising a plurality of serviceable cells each served by base station equipment, the cellular communication system employing discontinuous downlink control transmissions in a control channel multiframe from the base station equipment, the control channel multiframe having a multiplicity of control signalling blocks dynamically assignable to support a plurality of logical control channel functions and wherein at least some of said plurality of logical control channel functions are transmitted at a maximum power level, the cellular communication system characterised by: means for regularly distributing within the multiplicity of control signalling blocks those logical control channel functions transmitted at the maximum power level from said base station equipment.

In a preferred embodiment the logical control channel functions transmitted at the maximum power level include at least two species of logical control channel transmission, and the cellular communication system may therefore further comprise: means for structuring transmission of said species of logical control channel such that their transmissions follow a predetermined order.

In another aspect of the present invention there is provided a base station transceiver of a cellular communication system supporting discontinuous downlink transmissions, the base station transceiver arranged to transmit discontinuous downlink control transmissions in a control channel multiframe having a multiplicity of control signalling blocks dynamically assignable to support a plurality of logical control channel functions and wherein at least some of said plurality of logical control channel functions are transmitted at a maximum power level, the base station transceiver characterised by: means for selecting and regularly distributing within the multiplicity of control signalling blocks those logical control channel functions transmitted at the maximum power level from said base station equipment.

In a preferred embodiment the logical control channel functions transmitted at the maximum power level include at least two species of logical control channel transmission, and the base station transceiver further comprises: means for structuring transmission of said species of logical control channel such that their transmissions follow a predetermined order.

The base station transceiver is operationally responsive to a cell site controller, with the base station transceiver and cell site controller co-operating to provide structuring of the discontinuous downlink control transmissions of the control channel multiframe.

The present invention is particularly applicable to all COMPACT, and especially EDGE Compact capable mobile stations and base stations.

The present invention is beneficially applicable to all communication systems employing discontinuous transmissions of a control channel carrier communication resource. Indeed, the present invention provides a generic approach to reducing the time that subscriber units need both to perform power measurements and to synchronise on a network transmitting discontinuously on its main (i.e. dedicated control channel) carrier, typically in the radio frequency domain. Advantageously, the present invention therefore provides a system that can adapt to varying levels of logical control channel loading within blocks of a multiframe.

### Brief Description of the Drawings

An exemplary embodiment of the present invention will now be described with reference to the accompanying drawings, in which:
FIG. 1 illustrates a conventional cellular communication system which may support EDGE Compact transmissions and which may be adapted to support the present invention;
FIG. 2 shows a control channel multiframe adapted to support a preferred embodiment of the present invention.

### Detailed Description of a Preferred Embodiment

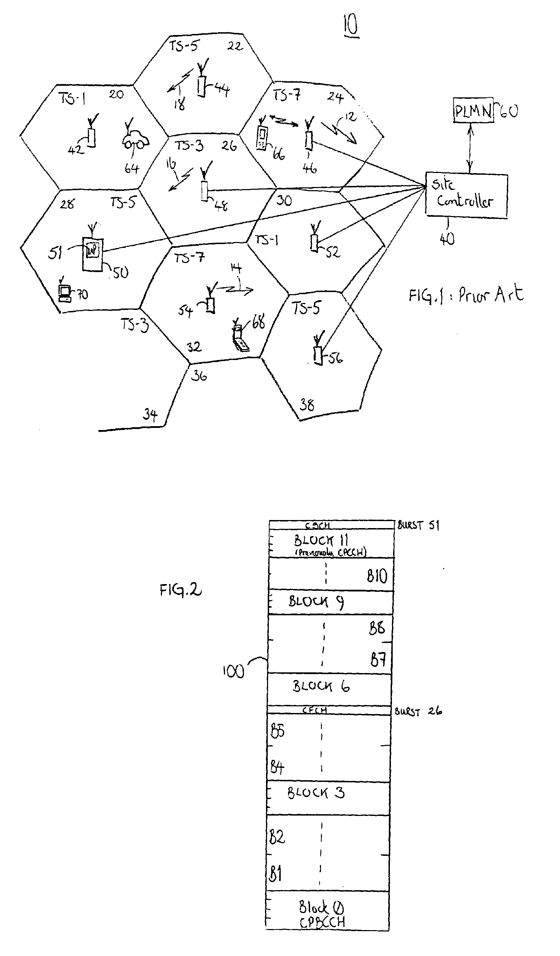

FIG. 1 shows a conventional cellular communication system 10 which may support EDGE Compact transmissions and which may be adapted to support the present invention. In generality, the cellular communication system 10 operates in a discontinuous fashion in which downlink transmissions 12-18 of control information are phased or otherwise distributed in time, such as by way of time groups (indicated in the diagram by time-slot numbers). The cellular system 10 may, in fact, be a multi-layer system employing an overlaid control channel, and in any event is effectively partitioned into a plurality of serving cells 20-38. The control channel may be on a dedicated control channel carrier, although spare/available channel resources of the dedicated control channel may possibly be utilised for traffic channel purposes to supplement any dedicated traffic channel carriers.

The cellular system 10 includes at least one base transceiver station (BTS/head) controller 40 coupled to provide operational control and, if necessary, synchronisation to transceiver heads or fully-functional base stations 42-56 in each of the cells 20-38; not all connections are shown for the sake of clarity. If multiple BTS controllers 40 are implemented in the cellular communication system, then interconnection of the BTS controllers through, typically, a wireline or optical interface ensures that consistent system operation is maintained, as will be readily appreciated. The BTS controller 40 is coupled, ultimately, into an MSC or the like and then into a comprehensive telecommunications network 60, such as an extended cellular network, a broadband network (e.g. an asynchronous transmission mode (ATM) domain) or a trunked network.

Although the individual base stations 42-56 may administer communication control within their respective cells, such communication control is more usually overseen and co-ordinated by the BTS controller 40. As such, the allocation of control signalling blocks may be provided at either a BTS controller level or below.

The operational structure of the base transceiver station will be readily appreciated, and its inter-operation with the BTS controller 40 regulated by suitable control intelligence and logic (such as processor 51 of base transceiver 50 in cell 28 having assigned thereto time group TS-5).

The cellular communication system 10 is also shown to include a distribution of subscriber units 64-70, some of which may be mobile and some of which may be fixed equipment, such as an infrared-coupled computer modem. Clearly, on an aperiodic basis, some cells may contain no mobiles, whereas other cells may contain mobiles which are simply not active, i.e. that are in an idle/sleep mode (such as mobile 186) and hence are affiliated to the system but generally do not generally contribute to traffic or interference. Generally, however, each cell 20-38 will regularly service a plurality of subscriber units on a TDM basis (in the specific instance of EDGE Compact).

The network of cells 20-38 co-operate to produce a merging of service areas (both traffic and control) at adjacent cell boundaries to provide area specific coverage. Interactions, such as call set-up procedures and handoff, between subscriber units within the cellular system 10 and the base stations (as well as functional partitioning between the BTS controller and the base stations) will be readily appreciated by the skilled addressee.

The present invention proposes a solution to the problem of excessive system access through the allocation of control signalling blocks (in a discontinuous system, such as EDGE Compact) such that the basic allocation strategy is known/understood by all subscriber units and a maximum time between two successive control signalling blocks is minimised. The CPBCCH and CPPCH blocks now follow an identical allocation rule (in terms of block allocation) and, since at least four signalling blocks are allocated in EDGE Compact, this ensures that at least blocks B0, B3, B6 and B9 are transmitted at the maximum power level by the base station. Previously, the subscriber unit could only be confident that blocks B0 and B11 contained full-power transmissions of control information, since these blocks were respectively allocated to the first CPBCCH and first CPPCH blocks (with every other block being dynamically assignable in terms of both content and relative location within the multiframe).

Of course, not all logical control channel blocks are necessarily always utilised within a multiframe, although certain control channel information (associated with critical species of control channel transmissions, such as broadcast and paging channels) is generally always supported by logical channel blocks within each and every multiframe.

It is preferred that the CPBCCH is also adjacent the CSCH (although this usually means that the adjacency is realised across a boundary of contiguous multiframes). This adjacency is beneficial because it aids in data recovery and because of the eventual underlying requirement to decode broadcast control channel information to determine whether the subscriber unit remains within a particular cell (i.e. whether the cell is suitable for the subscriber unit) or whether the mobile looks elsewhere for service.

Both of the CPBCCH and CPPCH block allocation schemes of the preferred embodiment of the present invention follow the rule in which blocks 0, 3, 6 and 9 are always transmitted at the maximum power level. Consequently, a subscriber unit wishing to perform power measurements can now open a measurement window having a maximum length equal to the distance between two allocated blocks, which in the preferred embodiment is no more than eighty-seven time-slots to ensure receipt of a meaningful full-power downlink transmission.

The preferred block allocation structure of the present invention is provided in the table below, although a skilled artisan will appreciate that different block allocations could be used.

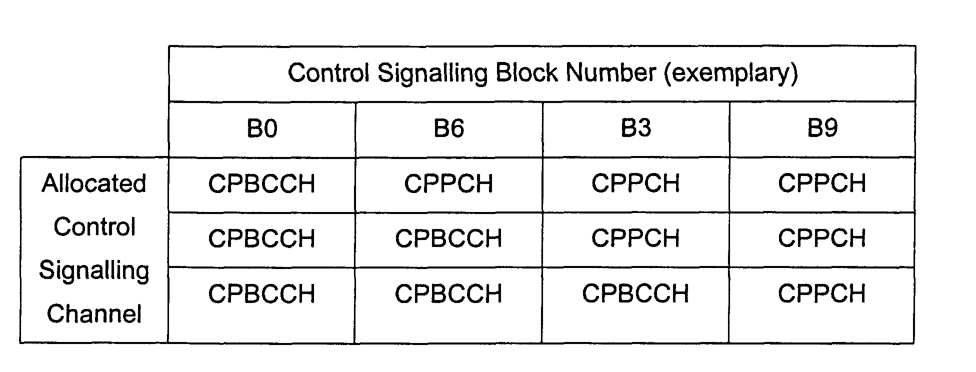

Referring briefly to FIG.2, this diagram illustrates inter-relationships between control signalling blocks in a EDGE Compact multiframe 100. The specific structure has already been discussed above, with the diagram more clearly demonstrating the construction of the multiframe 100. Single burst are allocated to CFCCH and CSCH (time-slot bursts 26 and 51), whilst logical control signalling channel blocks are shown in generality. Block 11 has been shown to illustrate present state-of-the-art structure in which a CPCCH immediately preceded the CSCH burst, although the preferred embodiment does not make use of block 11 for the basic four CPBCCH and CPCCH block transmissions. Of course, block 11 could be dynamically assigned to be another CPCCH, although this is a cell dependent decision. In summary, therefore, the block allocation scheme of the preferred embodiment of the present invention differs from pre-existing multiframe structures stipulated for GPRS and EDGE Compact, for example, with the present invention providing a partially regulated structure within a dynamically variable block allocation scheme. In other words, the system defines a set of (sequenced) control signalling blocks (such as, for example, B0, B6, B3 and B9) and identifies, in the preferred embodiment, two species of logical control channel that are to be transmitted at full power. When it comes to transmission, the first species is transmitted in the blocks identified in the set according to the sequence that each block occurs, with any remaining blocks then used in sequence to support the transmission of the remaining species. For example, if there is an equal distribution between CPBCCH and CPPCH in EDGE Compact, then CPBCCH will be transmitted in B0 and B6 (in the above example sequence), whereas CPPCH will be transmitted in blocks B3 and B9. Should there be only one BCCH, then CPBCCH appears in B0 whilst CPCCH appears in B6, B3 and B9. If there are three CPBCCHs, then blocks B0, B6 and B3 each support CPBCCH, while CPPCH is allocated to block B9. Of course, this example assumes a total of only four CPBCCHs and CPPCHs, but this number could clearly increase (although any additional CPBCCHs/CPPCHs would be assigned dynamically to other control signalling blocks but still transmitted at full power). The present invention therefore ensures that there is structure in relation to a minimum (predefined) number of logical control channels that are transmitted at full power and on a minimum system regulated basis.

Simulations of the block allocation scheme of the preferred embodiment have yielded a suggested improvement of up to 40% in relation to the power measurement and synchronisation procedure. Additionally, it is believed that use of the allocation scheme of the preferred embodiment should also accelerate subscriber unit scans based on frequency lists.

A power scan algorithm as previously described will only need a window of at least 87 time-slots duration, which represents a time gain of more than 40%. This gain is very important since the power scan was expected to be excessively long.

As the sequence of CPBCCH and CPPCH is now continuous in the ordered list, only one parameter is required to protect it as previously described. NIB_CPBCCH (2 bits) NIB_CPBCCH (4 bits) are removed and a single parameter is defined, called NIB for example. As there are 12 blocks, 4 bits are sufficient to code NIB. Since 3 of each parameter are broadcast in a cell, 6 bits have been spared in the CPBCCH.

In summary, the preferred embodiment of the present invention proposes a new allocation of the CPPCH logical channel that leads to a single allocation of the full power bursts within, for example, the EDGE Compact multiframe. The new allocation system therefore improves the power scan time ultimately required to assess cell suitability. In a preferred embodiment, this new allocation scheme is realised by a modification of the block allocation in the ETSI standards for Compact cellular.

Clearly, if there are varying numbers of control channel functions transmitted at a maximum power level, then the system can operate to select these particular control channel functions and to distribute their transmissions equally across each multiframe. It will be appreciated that the selection of the control signalling blocks that are subject to full transmit power is system dependent, and that CPBCCH and CPPCH are exemplary of an EDGE Compact system and therefore given by way of example and without limitation.

It will, of course, be appreciated that the above description has been given by way of example only and that modifications in detail may be made within the scope of the present invention. For example, the principals of the present invention can be employed within any cellular communication system employing any discontinuous transmission schemes (including, for example, capsule-type pico cellular systems). Although the preferred embodiment of the present invention is applicable to a control channel multiframe having twelve blocks, the invention could equally well be employed in systems having fewer or more control channel blocks within the multiframe. For example, the multiframe could employ eight or sixteen blocks and the number of bursts per block could be a number other than four. Indeed, the underlying inventive concept of providing some basic structure to the transmission of certain control channel blocks can be applied to a system where all blocks in a discontinuous transmission scheme are dynamically assignable or, in fact, where one or more blocks are preassigned to support specific logical control channel functions, such as BCCH or the like. It should also be stressed that the exemplary system has assumed that only two logical control channels (namely CPBCCH and CPPCH) are utilised at full transmission power, but the invention can, of course, be extended to systems having one, three or more logical control channels that are transmitted at full power. Again, it is the guarantee that there will always be a minimum and structured arrangement of full power blocks within the multiframe that is important.

## Claims

1. A method of structuring a control channel multiframe (100) in a cellular communication system (10) employing discontinuous downlink transmissions (12), the control channel multiframe (100) having a multiplicity of control signalling blocks (B0-B11) dynamically assignable to support a plurality of logical control channel functions and wherein some of said plurality of logical control channel functions (CPBCCH, CPPCH) are transmitted at a maximum power level, the method characterised by:
providing a regular distribution (B0, B3, B6, B9) within the multiplicity of control signalling blocks (B0-B11) of those logical control channel functions transmitted at the maximum power level.

2. The method of structuring a control channel multiframe (100) according to claim 1, wherein the logical control channel functions transmitted at the maximum power level include at least two species of logical control channel transmission, the method further comprising:
structuring transmission of said species of logical control channel such that their transmissions follow a predetermined order.

3. The method of structuring a control channel multiframe (100) according to claim 1 or 2, wherein at least two logical control channel functions are transmitted at the maximum power level during each control channel multiframe, said at least two control channel functions associated with at least one of a broadcast control channel and a paging channel.

4. The method of structuring a control channel multiframe (100) according to claim 2, wherein at least four logical control channel functions are transmitted at the maximum power level during each control channel multiframe, said at least four control channel functions associated with at least one broadcast control channel block and at least one paging channel block.

5. The method of structuring a control channel multiframe (100) according to any preceding claim, wherein the multiframe further comprises at least a synchronisation burst and the method further comprises:
placing the synchronisation burst substantially adjacent in time to, and preferably contiguous with, a broadcast control channel transmitted at the maximum power level.

6. The method of structuring a control channel multiframe (100) according to any preceding claim, wherein not all of the multiplicity of control signalling blocks are utilised on a multiframe-by-multiframe basis to support control channel information during each multiframe transmission sequence.

7. The method of structuring a control channel multiframe (100) according to any preceding claim, wherein the cellular communication system is a Compact cellular system and preferably an EDGE Compact cellular system, the multiframe further including at least a synchronisation burst and a frequency correction burst, the method further including:
distributing the synchronisation burst and the frequency correction burst equally within time during each multiframe.

8. A cellular communication system comprising a plurality of serviceable cells each served by base station equipment, the cellular communication system employing discontinuous downlink control transmissions in a control channel multiframe from the base station equipment, the control channel multiframe (100) having a multiplicity of control signalling blocks (B0-B11) dynamically assignable to support a plurality of logical control channel functions and wherein at least some of said plurality of logical control channel functions (CPBCCH, CPCCH) are transmitted at a maximum power level, the cellular communication system characterised by:
means for regularly distributing (B0, B3, B6, B9) within the multiplicity of control signalling blocks (B0-B11) those logical control channel functions transmitted at the maximum power level from said base station equipment.

9. The cellular communication system according to claim 8, wherein the logical control channel functions transmitted at the maximum power level include at least two species of logical control channel transmission, the cellular communication system further comprising:
means for structuring transmission of said species of logical control channel such that their transmissions follow a predetermined order.

10. The cellular communication system according to claim 8 or 9, wherein at least two logical control channel functions are transmitted at the maximum power level during each control channel multiframe, said at least two control channel functions associated with at least one of a broadcast control channel and a paging channel.

11. The cellular communication system according to claim 9, wherein at least four logical control channel functions are transmitted at the maximum power level during each control channel multiframe, said at least four control channel functions associated with at least one broadcast control channel block and at least one paging channel block.

12. The cellular communication system according to any one of claims 8 to 11, wherein the multiframe further comprises at least a synchronisation burst and the cellular communication system further comprises:
means for placing the synchronisation burst substantially adjacent in time to, and preferably contiguous with, a broadcast control channel transmitted at the maximum power level.

13. A base station transceiver (42-56) of a cellular communication system (10) supporting discontinuous downlink transmissions (12), the base station transceiver (42-56) arranged to transmit the discontinuous downlink control transmissions in a control channel multiframe (100) having a multiplicity of control signalling blocks (B0-B11) dynamically assignable to support a plurality of logical control channel functions and wherein at least some of said plurality of logical control channel functions (CPBCCH, CPCCH) are transmitted at a maximum power level, the base station transceiver (42-56) characterised by:
means (51) for selecting and regularly distributing (B0, B3, B6, B9) within the multiplicity of control signalling blocks (B0-B11) those logical control channel functions transmitted at the maximum power level from said base station equipment.

14. The base station transceiver according to claim 13, wherein the logical control channel functions transmitted at the maximum power level include at least two species of logical control channel transmission, the base station transceiver further comprises:
means (51) for structuring transmission of said species of logical control channel such that their transmissions follow a predetermined order.

15. The base station transceiver according to claim 13 or 14, wherein at least two logical control channel functions are transmitted at the maximum power level during each control channel multiframe, said at least two control channel functions associated with at least one of a broadcast control channel and a paging channel.

16. The base station transceiver according to claim 14, wherein at least four logical control channel functions are transmitted at the maximum power level during each control channel multiframe, said at least four control channel functions associated with at least one broadcast control channel block and at least one paging channel block.

17. The base station transceiver according to any one of claims 13 to 16, wherein the multiframe further comprises at least a synchronisation burst and the base station transceiver further comprises:
means (51) for placing the synchronisation burst substantially adjacent in time to, and preferably contiguous with, a broadcast control channel transmitted at the maximum power level.

18. The base station transceiver according to any one of claims 13 to 17, operationally responsive to a cell site controller (40), the base station (42-56) and cell site controller (40) having means (51) co-operating to provide structuring of the discontinuous downlink control transmissions of the control channel multiframe.
